# EUROPEAN PATENT APPLICATION

(11) **EP 4 480 639 A1**
(43) Date of publication of application: **25.12.2024**
(21) Application number: 22935801.5
(22) Date of filing: 29.03.2022
(51) Int. Cl.: B25J 5/00, B25J 9/00, B25J 19/00, B60B 33/00, B60B 33/04, B62D 57/024, B62D 57/032

(54) **ROBOT**

(71) Applicant: LG Electronics Inc., Yeongdeungpo-gu Seoul 07336 (KR)
(72) Inventor: LEE, Haklim, Seoul 06772 (KR)
(74) Representative: Schornack, Oliver
(86) International application number: PCT/KR2022/004405
(87) International publication number: WO 2023/191125

(57) **Abstract**

The robot comprises: a main body having a bottom plate; at least one wheel module mounted at the bottom plate; and an auxiliary wheel disposed at the bottom plate, wherein the wheel module comprises: a link motor arm; a front caster provided at the link motor arm; a link back arm rotatably connected to the link motor arm; a rear caster provided at the link back arm; a motor connected to the link motor arm and/or the link back arm; and a driving wheel rotated by means of the motor, wherein the size of the auxiliary wheel can be smaller than the size of the front caster.

## Description

### TECHNICAL FIELD

The present disclosure relates to a robot.

### BACKGROUND ART

A robot is a machine that automatically processes or operates a given task by own capabilities thereof, and the application fields of robots can be generally classified into industrial, medical, space, subsea use, and the like and can be used in various fields.

An example of a robot may comprise a driving wheel, a front caster, and a rear caster, and such a robot is disclosed in Korean Patent Publication No. 10-2020-0085661 (published on July 15, 2020).

The robot comprises a main body provided with a traveling unit, and the traveling unit comprises a driving wheel rotating around a driving shaft that is elongated in a left and right direction; and a driving motor that provides rotational power to the driving wheel; a front caster provided on a front bottom surface of the main body; and a rear caster provided at a rear bottom surface of the main body.

### DISCLOSURE OF THE INVENTION

### TECHNICAL PROBLEM

This embodiment provides a robot that overcomes obstacles on the ground with high stability.

### TECHNICAL SOLUTION

A robot according to this embodiment comprises: a robot comprises: a main body provided with a bottom plate; at least one wheel module mounted on the bottom plate; and an auxiliary wheel disposed on the bottom plate, wherein the wheel module comprises: a link motor arm; a front caster installed on the link motor arm; a link back arm rotatably connected to the link motor arm; a rear caster installed on the link back arm; a motor coupled to at least one of the link motor arm or the link back arm; and a driving wheel rotating by the motor, wherein the auxiliary wheel has a size less than a size of the front caster.

A distance from a front end of the bottom plate to a front end of the auxiliary wheel may be less a distance that from the front end of the bottom plate to a front end of the front caster.

The wheel module may be provided in a pair on the bottom plate, the auxiliary wheel may be provided in a pair on the bottom plate, and a distance between the pair of auxiliary wheels may be less than a distance between the pair of wheel modules.

A height of a lower end of the auxiliary wheel may be higher than a height of a lower end of the front caster.

The auxiliary wheel may comprise: an auxiliary body coupled to the bottom plate; and a wheel disposed to be rotatable with respect to the auxiliary body, wherein a front charging terminal assembly may be coupled to the auxiliary body.

The wheel module may further comprise: a front hinge which is mounted on the bottom plate and to which the link motor arm is rotatably connected through a first hinge shaft; a rear hinge which is mounted on the bottom plate and on which a pin guide is disposed; and a guide pin installed on the link back arm and slidably guided along the pin guide, wherein the link back arm may be connected to the link motor arm through a second hinge shaft.

The pin guide may be provided to be elongated in a forward and backward direction of the rear hinge.

The robot may further comprise a hinge member rotatably disposed on the bottom plate, wherein the auxiliary wheel may be mounted on the hinge member.

The robot may further comprise a spring configured to elastically support the hinge member at an upper side of the hinge member.

The robot may further comprise: a front spring disposed on the bottom plate to buffer the link motor arm; and a rear spring disposed on the bottom plate to buffer the link back arm.

A spring constant of the front spring may be less than a spring constant of the rear spring.

The link motor arm may comprise a front caster mounting portion to which the front caster is coupled, and the front spring may be in contact with the front caster mounting portion.

The link back arm may comprise a rear caster mounting portion to which the rear caster is coupled, and the rear spring may be in contact with the rear caster mounting portion.

### ADVANTAGEOUS EFFECTS

According to this embodiment, the robot may overcome the obstacles in multiple stages using the auxiliary wheels and the front caster to minimize the size of the front caster and allow the robot to travel more stably.

In addition, the auxiliary wheel, the front caster, and the rear casters may be provided to reduce the number of motors.

In addition, all of the robot travels, the front caster, the driving wheel, and the rear caster may travel along the curve of the ground on which the robot travels in the state of being in contact with the ground to minimize the shaking of the robot and allow the robot to stably travel.

In addition, since the auxiliary wheel rotates together with the hinge member, the damage of the auxiliary wheel may be minimized.

In addition, the impact applied to the auxiliary wheel may be buffered by the spring that elastically supports the hinge member.

In addition, the link motor arm and the link back arm may be buffered by the front spring and the rear spring to buffer the impact applied to the wheel module.

In addition, the spring constant of the front spring may be less than that of the rear spring, and thus, the buffering may be performed from front to rear, and thus, the robot may be more stably maintained.

### BRIEF DESCRIPTION OF THE DRAWINGS

Fig. 1 illustrates an artificial intelligence (AI) device comprising a robot according to an embodiment of the present disclosure.
Fig. 2 illustrates an AI server connected to a robot according to an embodiment of the present disclosure.
Fig. 3 illustrates an AI system according to an embodiment of the present disclosure.
Fig. 4 illustrates a perspective view of an example of a robot according to an embodiment of the present disclosure.
Fig. 5 illustrates a front view of an example of the robot according to an embodiment of the present disclosure.
Fig. 6 illustrates a side view illustrating an example of the robot according to an embodiment of the present disclosure.
Fig. 7 illustrates a rear view illustrating an example of the robot according to an embodiment of the present disclosure.
Fig. 8 illustrates an internal perspective view of an example of the robot according to an embodiment of the present disclosure.
Fig. 9 illustrates an internal front view of an example of the robot according to an embodiment of the present disclosure.
Fig. 10 illustrates a perspective view of a conveyor of an example of the robot according to an embodiment of the present disclosure.
Fig. 11 illustrates an internal rear view of an example of the robot according to an embodiment of the present disclosure.
Fig. 12 illustrates a view of a configuration of an example of the robot according to an embodiment of the present disclosure.
Fig. 13 illustrates a view when an example of the robot is docked with a storage box according to an embodiment of the present disclosure.
Fig. 14 illustrates a side view of an example of a wheel module according to an embodiment of the present disclosure.
Fig. 15 illustrates a perspective view of an example of the wheel module according to an embodiment of the present disclosure.
Fig. 16 illustrates a view of another example of the robot according to an embodiment of the present disclosure.
Fig. 17 illustrates a view of further another example of the robot according to an embodiment of the present disclosure.

### MODE FOR CARRYING OUT THE INVENTION

Hereinafter, detailed embodiments will be described in detail with reference to the accompanying drawings.

Hereinafter, when an element is described as being "coupled" or "connected" to another element, it means that the two elements are directly coupled or connected, or a third element exists between the two elements, and the two elements are coupled or connected to each other by the third element. On the other hand, the "direct coupling" or "direct connecting" of one element to the other element may be understood that the third element does not exist between the two elements.

### <Robot>

A robot may refer to a machine that automatically processes or operates a given task by its own ability. In particular, a robot having a function of recognizing an environment and performing a self-determination operation may be referred to as an intelligent robot.

Robots may be classified into industrial robots, medical robots, home robots, military robots, and the like according to the use purpose or field.

The robot comprises a driving unit may comprise an actuator or a motor and may perform various physical operations such as moving a robot joint. In addition, a movable robot may comprise a wheel, a brake, a propeller, and the like in a driving unit, and may travel on the ground through the driving unit or fly in the air.

### <Artificial Intelligence (AI)>

Artificial intelligence refers to the field of studying artificial intelligence or methodology for making artificial intelligence, and machine learning refers to the field of defining various issues dealt with in the field of artificial intelligence and studying methodology for solving the various issues. Machine learning is defined as an algorithm that enhances the performance of a certain task through a steady experience with the certain task.

An artificial neural network (ANN) is a model used in machine learning and may mean a whole model of problem-solving ability which is composed of artificial neurons (nodes) that form a network by synaptic connections. The artificial neural network can be defined by a connection pattern between neurons in different layers, a learning process for updating model parameters, and an activation function for generating an output value.

The artificial neural network may comprise an input layer, an output layer, and optionally one or more hidden layers. Each layer comprises one or more neurons, and the artificial neural network may comprise a synapse that links neurons to neurons. In the artificial neural network, each neuron may output the function value of the activation function for input signals, weights, and deflections input through the synapse.

Model parameters refer to parameters determined through learning and comprise a weight value of synaptic connection and deflection of neurons. A hyperparameter means a parameter to be set in the machine learning algorithm before learning, and comprises a learning rate, a repetition number, a mini batch size, and an initialization function.

The purpose of the learning of the artificial neural network may be to determine the model parameters that minimize a loss function. The loss function may be used as an index to determine optimal model parameters in the learning process of the artificial neural network.

Machine learning may be classified into supervised learning, unsupervised learning, and reinforcement learning according to a learning method.

The supervised learning may refer to a method of learning an artificial neural network in a state in which a label for learning data is given, and the label may mean the correct answer (or result value) that the artificial neural network must infer when the learning data is input to the artificial neural network. The unsupervised learning may refer to a method of learning an artificial neural network in a state in which a label for learning data is not given. The reinforcement learning may refer to a learning method in which an agent defined in a certain environment learns to select a behavior or a behavior sequence that maximizes cumulative compensation in each state.

Machine learning, which is implemented as a deep neural network (DNN) comprising a plurality of hidden layers among artificial neural networks, is also referred to as deep learning, and the deep learning is part of machine learning. In the following, machine learning is used to mean deep learning.

### <Self-Driving>

Self-driving refers to a technique of driving for oneself, and a self-driving vehicle refers to a vehicle that travels without an operation of a user or with a minimum operation of a user.

For example, the self-driving may comprise a technology for maintaining a lane while driving, a technology for automatically adjusting a speed, such as adaptive cruise control, a technique for automatically traveling along a predetermined route, and a technology for automatically setting and traveling a route when a destination is set.

The vehicle may comprise a vehicle having only an internal combustion engine, a hybrid vehicle having an internal combustion engine and an electric motor together, and an electric vehicle having only an electric motor, and may comprise not only an automobile but also a train, a motorcycle, and the like.

At this time, the self-driving vehicle may be regarded as a robot having a self-driving function.

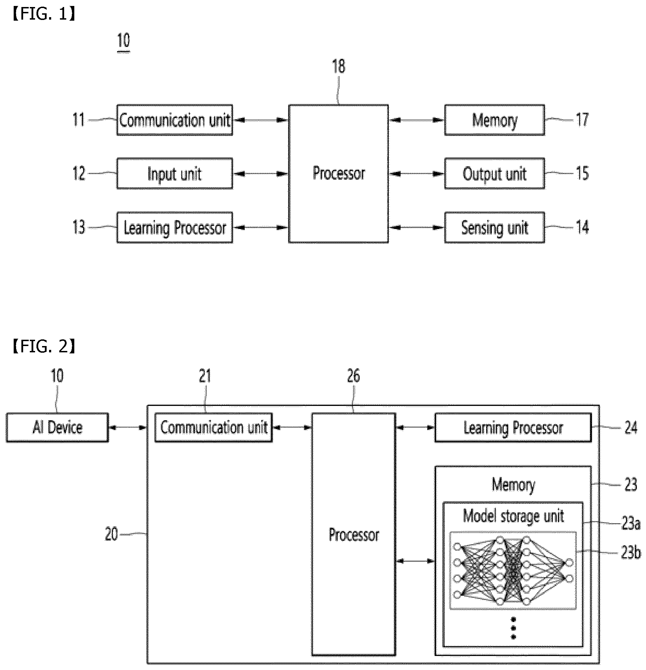

Fig. 1 illustrates an AI device 10 comprising a robot according to an embodiment of the present disclosure.

The AI device 10 may be implemented by a stationary device or a mobile device, such as a TV, a projector, a mobile phone, a smartphone, a desktop computer, a notebook, a digital broadcasting terminal, a personal digital assistant (PDA), a portable multimedia player (PMP), a navigation device, a tablet PC, a wearable device, a set-top box (STB), a DMB receiver, a radio, a washing machine, a refrigerator, a desktop computer, a digital signage, a robot, a vehicle, and the like.

Referring to Fig. 1, the AI device 10 may comprise a communication unit 11, an input unit 12, a learning processor 13, a sensing unit 14, an output unit 15, a memory 17, and a processor 18.

The communication unit 11 may transmit and receive data to and from external devices such as other AI devices 10a to 10e and the AI server 20 by using wire/wireless communication technology. For example, the communication unit 11 may transmit and receive sensor information, a user input, a learning model, and a control signal to and from external devices.

The communication technology used by the communication unit 11 comprises GSM (Global System for Mobile communication), CDMA (Code Division Multi Access), LTE (Long Term Evolution), 5G, WLAN (Wireless LAN), Wi-Fi (Wireless-Fidelity), Bluetooth^{™}, RFID (Radio Frequency Identification), Infrared Data Association (IrDA), ZigBee, NFC (Near Field Communication), and the like.

The input unit 12 may acquire various kinds of data.

At this time, the input unit 12 may comprise a camera for inputting a video signal, a microphone for receiving an audio signal, and a user input interface for receiving information from a user. The camera or the microphone may be treated as a sensor, and the signal acquired from the camera or the microphone may be referred to as sensing data or sensor information.

The input unit 12 may acquire a learning data for model learning and an input data to be used when an output is acquired by using learning model. The input unit 12 may acquire raw input data. In this case, the processor 18 or the learning processor 13 may extract an input feature by preprocessing the input data.

The learning processor 13 may learn a model composed of an artificial neural network by using learning data. The learned artificial neural network may be referred to as a learning model. The learning model may be used to an infer result value for new input data rather than learning data, and the inferred value may be used as a basis for determination to perform a certain operation.

At this time, the learning processor 13 may perform AI processing together with the learning processor 24 of the AI server 20.

At this time, the learning processor 13 may comprise a memory integrated or implemented in the AI device 10. Alternatively, the learning processor 13 may be implemented by using the memory 17, an external memory directly connected to the AI device 10, or a memory held in an external device.

The sensing unit 14 may acquire at least one of internal information about the AI device 10, ambient environment information about the AI device 10, and user information by using various sensors.

Examples of the sensors comprised in the sensing unit 14 may comprise a proximity sensor, an illuminance sensor, an acceleration sensor, a magnetic sensor, a gyro sensor, an inertial sensor, an RGB sensor, an IR sensor, a fingerprint recognition sensor, an ultrasonic sensor, an optical sensor, a microphone, a lidar, and a radar.

The output unit 15 may generate an output related to a visual sense, an auditory sense, or a haptic sense.

At this time, the output unit 15 may comprise a display unit for outputting time information, a speaker for outputting auditory information, and a haptic module for outputting haptic information.

The memory 17 may store data that supports various functions of the AI device 10. For example, the memory 17 may store input data acquired by the input unit 12, learning data, a learning model, a learning history, and the like.

The processor 18 may determine at least one executable operation of the AI device 10 based on information determined or generated by using a data analysis algorithm or a machine learning algorithm. The processor 18 may control the components of the AI device 10 to execute the determined operation.

To this end, the processor 18 may request, search, receive, or utilize data of the learning processor 13 or the memory 17. The processor 18 may control the components of the AI device 10 to execute the predicted operation or the operation determined to be desirable among the at least one executable operation.

When the connection of an external device is required to perform the determined operation, the processor 18 may generate a control signal for controlling the external device and may transmit the generated control signal to the external device.

The processor 18 may acquire intention information for the user input and may determine the user's requirements based on the acquired intention information.

The processor 18 may acquire the intention information corresponding to the user input by using at least one of a speech to text (STT) engine for converting speech input into a text string or a natural language processing (NLP) engine for acquiring intention information of a natural language.

At least one of the STT engine or the NLP engine may be configured as an artificial neural network, at least part of which is learned according to the machine learning algorithm. At least one of the STT engine or the NLP engine may be learned by the learning processor 13, may be learned by the learning processor 24 of the AI server 20, or may be learned by their distributed processing.

The processor 18 may collect history information comprising the operation contents of the AI apparatus 100 or the user's feedback on the operation and may store the collected history information in the memory 17 or the learning processor 13 or transmit the collected history information to the external device such as the AI server 20. The collected history information may be used to update the learning model.

The processor 18 may control at least part of the components of AI device 10 so as to drive an application program stored in memory 17. Furthermore, the processor 18 may operate two or more of the components comprised in the AI device 10 in combination so as to drive the application program.

Fig. 2 illustrates an AI server 20 connected to a robot according to an embodiment of the present disclosure.

Referring to Fig. 2, the AI server 20 may refer to a device that learns an artificial neural network by using a machine learning algorithm or uses a learned artificial neural network. The AI server 20 may comprise a plurality of servers to perform distributed processing, or may be defined as a 5G network. At this time, the AI server 20 may be comprised as a partial configuration of the AI device 10, and may perform at least part of the AI processing together.

The AI server 20 may comprise a communication unit 21, a memory 23, a learning processor 24, a processor 26, and the like.

The communication unit 21 can transmit and receive data to and from an external device such as the AI device 10.

The memory 23 may comprise a model storage unit 23a. The model storage unit 23a may store a learning or learned model (or an artificial neural network 26b) through the learning processor 24.

The learning processor 24 may learn the artificial neural network 26b by using the learning data. The learning model may be used in a state of being mounted on the AI server 20 of the artificial neural network, or may be used in a state of being mounted on an external device such as the AI device 10.

The learning model may be implemented in hardware, software, or a combination of hardware and software. If all or part of the learning models are implemented in software, one or more instructions that constitute the learning model may be stored in memory 23.

The processor 26 may infer the result value for new input data by using the learning model and may generate a response or a control command based on the inferred result value.

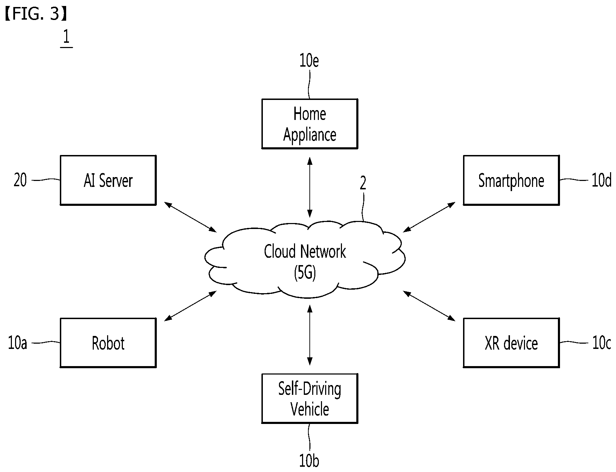

Fig. 3 illustrates an AI system 1 according to an embodiment of the present disclosure.

Referring to Fig. 3, in the AI system 1, at least one of an AI server 20, a robot 10a, a self-driving vehicle 10b, an XR device 10c, a smartphone 10d, or a home appliance 10e is connected to a cloud network 2. The robot 10a, the self-driving vehicle 10b, the XR device 10c, the smartphone 10d, or the home appliance 10e, to which the AI technology is applied, may be referred to as AI devices 10a to 10e.

The cloud network 2 may refer to a network that forms part of a cloud computing infrastructure or exists in a cloud computing infrastructure. The cloud network 2 may be configured by using a 3G network, a 4G or LTE network, or a 5G network.

That is, the devices 10a to 10e and 20 configuring the AI system 1 may be connected to each other through the cloud network 2. In particular, each of the devices 10a to 10e and 20 may communicate with each other through a base station, but may directly communicate with each other without using a base station.

The AI server 20 may comprise a server that performs AI processing and a server that performs operations on big data.

The AI server 20 may be connected to at least one of the AI devices constituting the AI system 1, that is, the robot 10a, the self-driving vehicle 10b, the XR device 10c, the smartphone 10d, or the home appliance 10e through the cloud network 2, and may assist at least part of AI processing of the connected AI devices 10a to 10e.

At this time, the AI server 20 may learn the artificial neural network according to the machine learning algorithm instead of the AI devices 10a to 10e, and may directly store the learning model or transmit the learning model to the AI devices 10a to 10e.

At this time, the AI server 20 may receive input data from the AI devices 10a to 10e, may infer the result value for the received input data by using the learning model, may generate a response or a control command based on the inferred result value, and may transmit the response or the control command to the AI devices 10a to 10e.

Alternatively, the AI devices 10a to 10e may infer the result value for the input data by directly using the learning model, and may generate the response or the control command based on the inference result.

Hereinafter, various embodiments of the AI devices 10a to 10e to which the above-described technology is applied will be described. The AI devices 10a to 10e illustrated in Fig. 3 may be regarded as a specific embodiment of the AI device 10 illustrated in Fig. 1. <AI + Robot>

The robot 10a, to which the AI technology is applied, may be implemented as a guide robot, a carrying robot, a cleaning robot, a wearable robot, an entertainment robot, a pet robot, an unmanned flying robot, or the like.

The robot 10a may comprise a robot control module for controlling the operation, and the robot control module may refer to a software module or a chip implementing the software module by hardware.

The robot 10a may acquire state information about the robot 10a by using sensor information acquired from various kinds of sensors, may detect (recognize) surrounding environment and objects, may generate map data, may determine the route and the travel plan, may determine the response to user interaction, or may determine the operation.

The robot 10a may use the sensor information acquired from at least one sensor among the lidar, the radar, and the camera so as to determine the travel route and the travel plan.

The robot 10a may perform the above-described operations by using the learning model composed of at least one artificial neural network. For example, the robot 10a may recognize the surrounding environment and the objects by using the learning model, and may determine the operation by using the recognized surrounding information or object information. The learning model may be learned directly from the robot 10a or may be learned from an external device such as the AI server 20.

At this time, the robot 10a may perform the operation by generating the result by directly using the learning model, but the sensor information may be transmitted to the external device such as the AI server 20 and the generated result may be received to perform the operation.

The robot 10a may use at least one of the map data, the object information detected from the sensor information, or the object information acquired from the external apparatus to determine the travel route and the travel plan, and may control the driving unit such that the robot 10a travels along the determined travel route and travel plan.

The map data may comprise object identification information about various objects arranged in the space in which the robot 10a moves. For example, the map data may comprise object identification information about fixed objects such as walls and doors and movable objects such as pollen and desks. The object identification information may comprise a name, a type, a distance, and a position.

In addition, the robot 10a may perform the operation or travel by controlling the driving unit based on the control/interaction of the user. At this time, the robot 10a may acquire the intention information of the interaction due to the user's operation or speech utterance, and may determine the response based on the acquired intention information, and may perform the operation.

### <AI + Robot + Self-Driving>

The robot 10a, to which the AI technology and the self-driving technology are applied, may be implemented as a guide robot, a carrying robot, a cleaning robot, a wearable robot, an entertainment robot, a pet robot, an unmanned flying robot, or the like.

The robot 10a, to which the AI technology and the self-driving technology are applied, may refer to the robot itself having the self-driving function or the robot 10a interacting with the self-driving vehicle 10b.

The robot 10a having the self-driving function may collectively refer to a device that moves for itself along the given movement line without the user's control or moves for itself by determining the movement line by itself.

The robot 10a and the self-driving vehicle 10b having the self-driving function may use a common sensing method so as to determine at least one of the travel route or the travel plan. For example, the robot 10a and the self-driving vehicle 10b having the self-driving function may determine at least one of the travel route or the travel plan by using the information sensed through the lidar, the radar, and the camera.

The robot 10a that interacts with the self-driving vehicle 10b exists separately from the self-driving vehicle 10b and may perform operations interworking with the self-driving function of the self-driving vehicle 10b or interworking with the user who rides on the self-driving vehicle 10b.

At this time, the robot 10a interacting with the self-driving vehicle 10b may control or assist the self-driving function of the self-driving vehicle 10b by acquiring sensor information on behalf of the self-driving vehicle 10b and providing the sensor information to the self-driving vehicle 10b, or by acquiring sensor information, generating environment information or object information, and providing the information to the self-driving vehicle 10b.

Alternatively, the robot 10a interacting with the self-driving vehicle 10b may monitor the user boarding the self-driving vehicle 10b, or may control the function of the self-driving vehicle 10b through the interaction with the user. For example, when it is determined that the driver is in a drowsy state, the robot 10a may activate the self-driving function of the self-driving vehicle 10b or assist the control of the driving unit of the self-driving vehicle 10b. The function of the self-driving vehicle 10b controlled by the robot 10a may comprise not only the self-driving function but also the function provided by the navigation system or the audio system provided in the self-driving vehicle 10b.

Alternatively, the robot 10a that interacts with the self-driving vehicle 10b may provide information or assist the function to the self-driving vehicle 10b outside the self-driving vehicle 10b. For example, the robot 10a may provide traffic information comprising signal information and the like, such as a smart signal, to the self-driving vehicle 10b, and automatically connect an electric charger to a charging port by interacting with the self-driving vehicle 10b like an automatic electric charger of an electric vehicle.

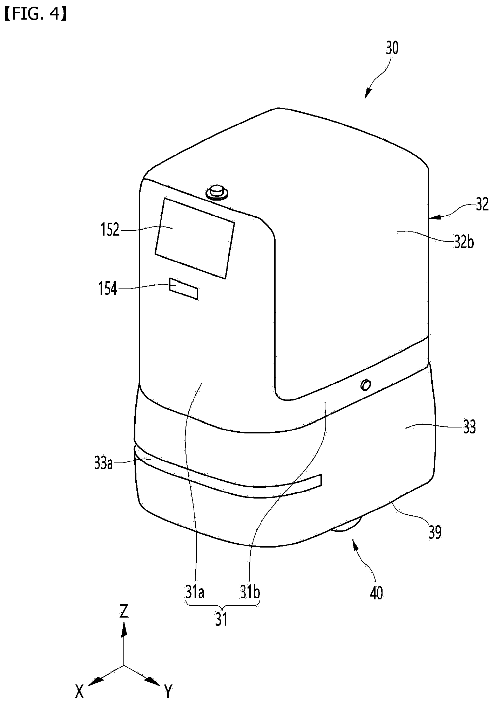

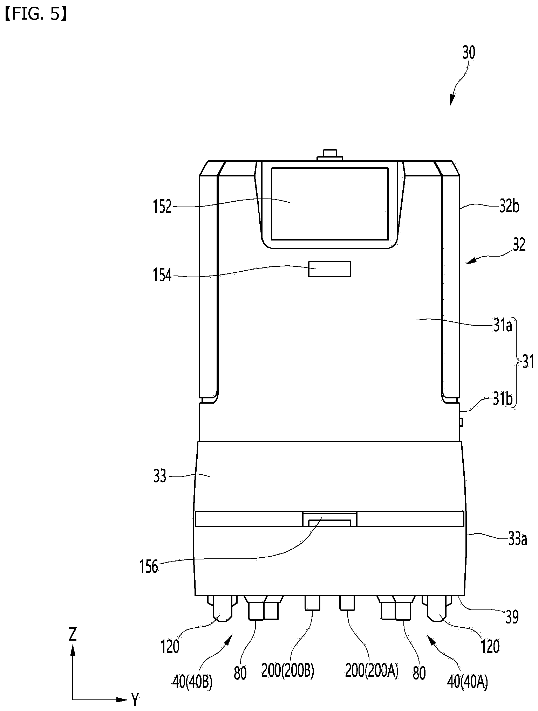

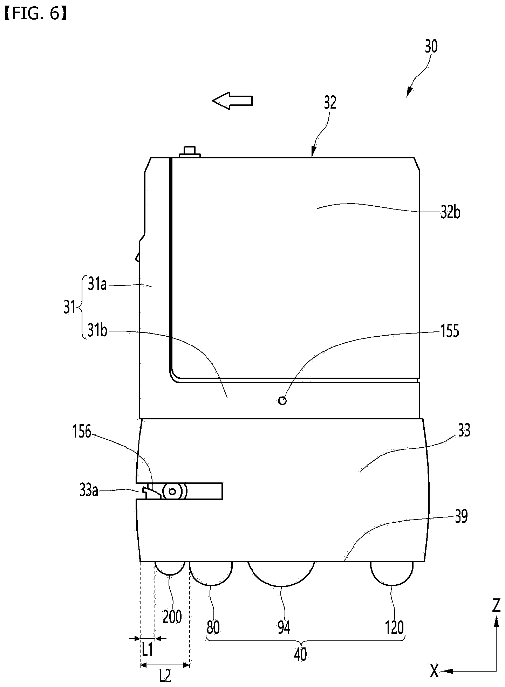

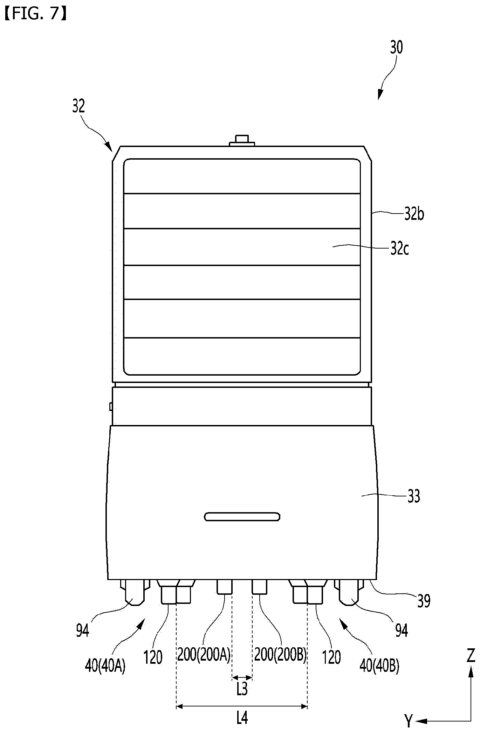

Fig. 4 illustrates a perspective view of an example of a robot according to an embodiment of the present disclosure, Fig. 5 illustrates a front view of an example of the robot according to an embodiment of the present disclosure, Fig. 6 illustrates a side view illustrating an example of the robot according to an embodiment of the present disclosure, and Fig. 7 illustrates a rear view illustrating an example of the robot according to an embodiment of the present disclosure.

A robot 10a may comprise a main body 30 and at least one wheel module 40.

An example of the robot 10a may be a delivery robot capable of transporting delivered goods (hereinafter, referred to as a consignment) such as foods, medicines, and delivery goods.

The main body 30 may be constituted by a combination of a plurality of members and may be a robot body.

When the robot 10a is a delivery robot, the main body 30 may comprise a front cover 31, a container 32, and a low cover 33.

The front cover 31 may comprise a front body 31a that is elongated in a vertical direction and a lower body 31b extending in a front and rear direction from a lower portion of the front body 31a.

As illustrated in Figs. 4 and 5, a display 152 that displays information and a front camera 154 that photographs a front side of the robot 10a may be disposed on the front cover 31, especially the front body 31a.

A side camera 155 (see Fig. 6) that photographs a side of the robot 10a may be disposed on the front cover 31, especially the lower body 31a.

The container 32 may be disposed on the lower body 31b. A space in which the consignment is accommodated may be defined inside the container 32. A shutter door 32c may be disposed on a rear surface of the container 32, and the shutter door 32c may be a sliding shutter door that is slid to open and close the inside of the container 32.

The lower cover 33 may be disposed below the lower body 31b. The lower cover 33 may surround a lower portion of the robot 10a and protect the lower portion of the robot 10a.

In the robot 10a, a lidar installed on the main body 30 may be a lidar system that irradiates a laser pulse and then measures a time that is takes to be reflected to return so as to measure position coordinates.

The lower cover 33 may be provided with an opening 33a through which the laser pulse generated by the lidar 156 passes.

The main body 30 may comprise a bottom plate spaced apart from the ground, and at least one wheel module 40 and at least one auxiliary wheel may be mounted on the bottom plate 39.

The wheel module 40 may support the main body 30 so that the main body 30 is spaced apart from the ground G and may be a traveling module through which the robot 10a travels.

The wheel module 40 may comprise a front caster 80, a driving wheel 94, and a rear caster 120.

The auxiliary wheels 200 may assist the wheel module 40 so that the robot 10a easily overcomes obstacles such as bumps on the ground.

As illustrated in FIG. 6, the auxiliary wheel 200 may be disposed in front of the front caster 80. As illustrated in FIG. 6, a distance L1 from a front end of the bottom plate 39 to a front end of the auxiliary wheel 200 may be less than a distance L2 from a front end of the bottom plate 39 to a front end of the front caster 80.

When the robot 10a moves forward, the auxiliary wheel 200 may overcome the obstacles prior to the front caster 80.

An example of the robot 10a may comprise a plurality of wheel modules 40 and a plurality of auxiliary wheels 200.

The plurality of wheel modules 40 may comprise a pair of wheel modules 40A and 40B, and the pair of wheel modules 40A and 40B may comprise a left wheel module 40A and a right wheel module 40B. The left wheel module 40A and the right wheel module 40B may be installed to be horizontally symmetrical to each other and may be spaced apart from each other in a left and right direction Y.

The left wheel module 40A may be disposed at a left side of the main body 30 based on a center of the bottom plate in the left and right direction Y, and the right wheel module 40B may be disposed at a left side of the main body 30 based on the center of the bottom plate in the left and right direction Y.

The left wheel module 40A and the right wheel module 40B may have the same structure.

The plurality of auxiliary wheels 200 may comprise a pair of auxiliary wheels 200A and 200B, and the pair of auxiliary wheels 200A and 200B may comprise a left auxiliary wheel 200A and a right auxiliary wheel 200B. The left auxiliary wheel 200A and the right auxiliary wheel 200B may be installed to be horizontally symmetrical to each other left and right and may be spaced apart from each other in the left and right direction Y.

The left auxiliary wheel 200A may be disposed at the left side of the bottom plate based on the center of the bottom plate in the left and right direction Y, and the right auxiliary wheel 200B may be disposed at the right side of the main body 30 based on the center of the bottom plate in the left and right direction Y.

The left auxiliary wheel 200A and the right auxiliary wheel 200B may have the same structure.

A distance L3 between the pair of auxiliary wheels 200A and 200B may be less than a distance L4 between the pair of wheel modules 40A and 40B.

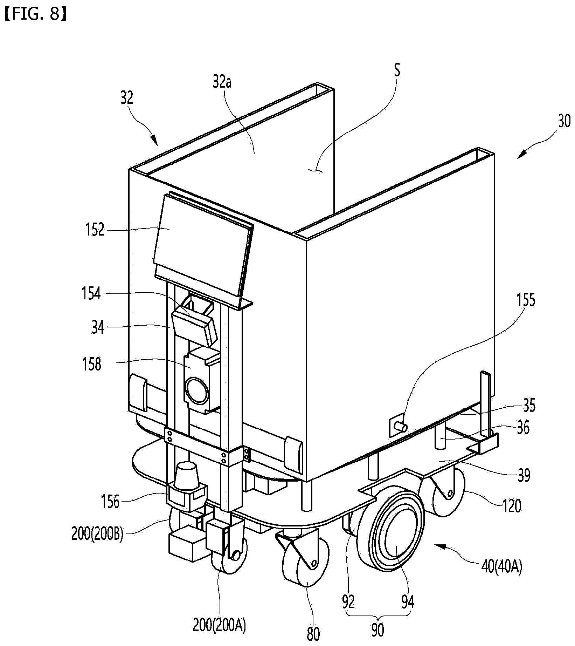

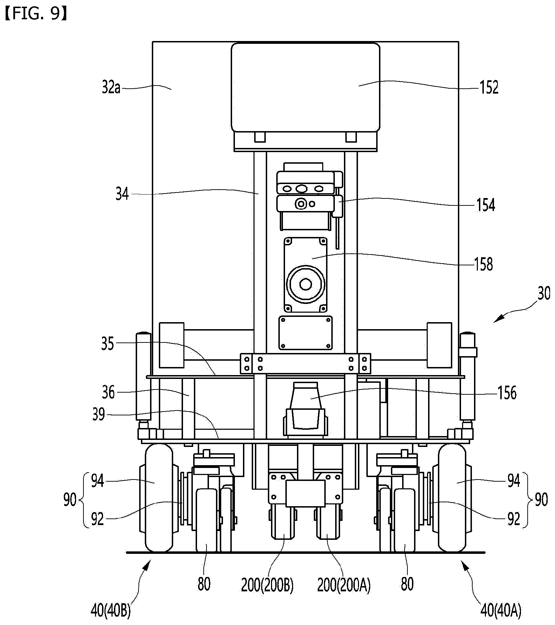

Fig. 8 illustrates an internal perspective view of an example of the robot according to an embodiment of the present disclosure, and Fig. 9 illustrates an internal front view of an example of the robot according to an embodiment of the present disclosure.

The container 32 may comprise a container frame 32a in which a space S, in which the consignment is accommodated, is defined.

The container frame 32a may have opened top and rear surfaces. An outer surface of the container frame 32a may be protected by the container cover 32a illustrated in Figs. 4 to 7.

The rear surface of the container frame 32a may be opened and closed by a shutter door 32c (see Fig. 7).

The main body 30 may comprise a front frame 34 in front of the container frame 32.

The front frame 34 may be coupled to the bottom plate 39. The front frame 34 may be coupled to a front portion of the bottom plate 39 and may be disposed to be elongated upward from the bottom plate 39.

The display 152 may be disposed above the front frame 34.

The front camera 154 may be mounted on the front frame 34.

A speaker 158 that outputs auditory information may be disposed on the front frame 34.

The main body 30 may comprise an upper plate 35 disposed above the bottom plate 39. The upper plate 35 may be installed to be spaced apart from the bottom plate 39 by a post 36.

The post 36 may be provided in plurality between the bottom plate 39 and the upper plate 35.

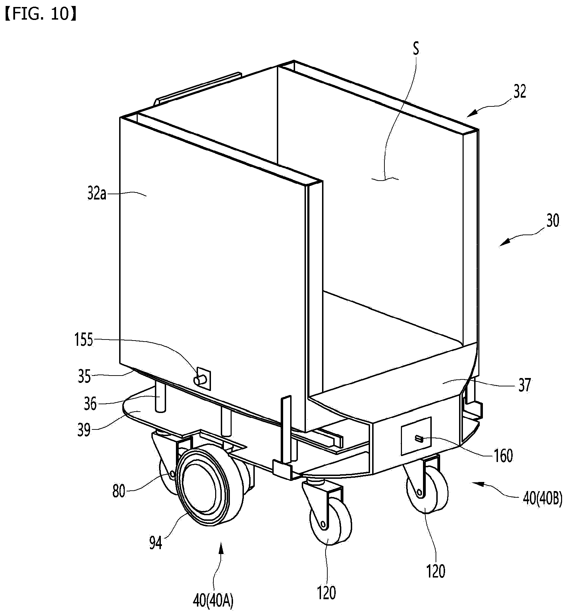

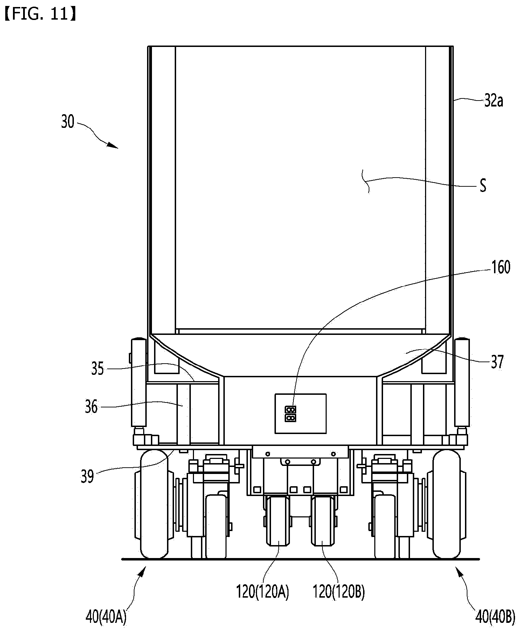

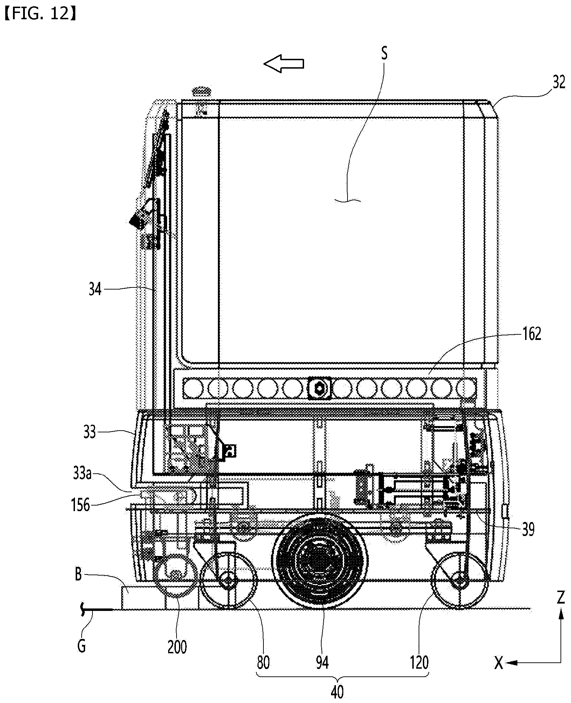

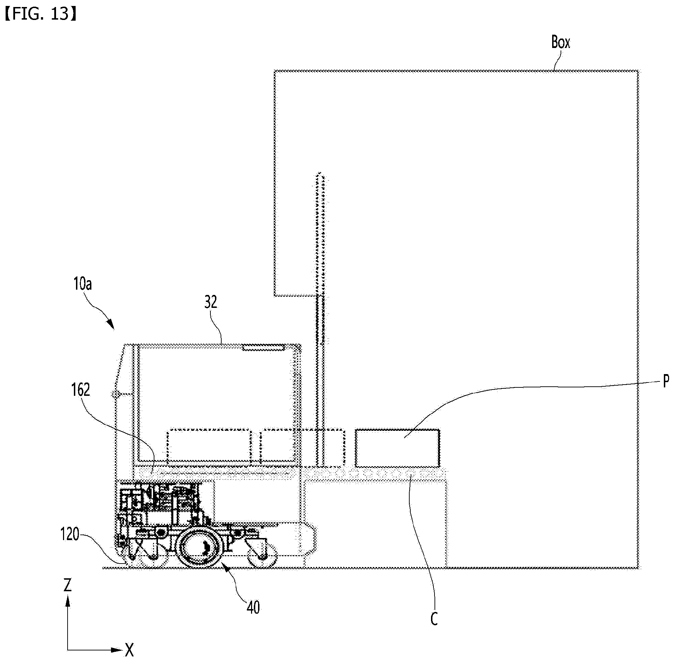

Fig. 10 illustrates a perspective view of a conveyor of an example of the robot according to an embodiment of the present disclosure, Fig. 11 illustrates an internal rear view of an example of the robot according to an embodiment of the present disclosure, Fig. 12 illustrates a view of a configuration of an example of the robot according to an embodiment of the present disclosure, and Fig. 13 illustrates a view when an example of the robot is docked with a storage box according to an embodiment of the present disclosure.

The main body 30 may further comprise a rear body 37 as illustrated in Figs. 10 and 11.

The rear body 37 may connect the bottom plate 39 to a lower portion of the container 32.

A rear charging terminal 160 may be disposed on the rear body 37.

The robot 10a may be charged when the rear charging terminal 160 moves to a power supply terminal (not shown) of a charging station or when a charging cable (not shown) is connected to the rear charging terminal 160.

As illustrated in Fig. 12, the robot 10a may travel in the state of being placed on the ground G may encounter an obstacle O such as a bump disposed on the ground G while traveling.

The front caster 80, the driving wheel 94, and the rear wheel 120 may be rolled along the ground G in the state of being in contact with the ground G.

The auxiliary wheel 200 may be installed to be spaced apart from the ground G when the robot 10a does not encounter the obstacle O. A height of a lower end of the auxiliary wheel 120 may be higher than that of a lower end of the front caster 80.

The auxiliary wheel 200 may be spaced apart from the ground G during normal traveling and may be in contact with the obstacle O and then be climbed over the obstacle O when the robot 10a encounters the obstacle O.

The robot 10a may travel over a low-height obstacle O, and since the robot 10a does not overcome a high-height obstacle, the robot 10a may travel while avoiding the high-height obstacle.

The robot 10a may travel over the obstacle O having a height below a set height, and an example of the set height may be 40 cm.

The robot 10a may further comprise a conveyor 162 disposed on the container 32, as illustrated in Figs. 11 and 12.

The conveyor 162 may be disposed at an inner lower portion of the container 32. When a consignment P is input into the space S of the container 32, the consignment P may be disposed on a top surface of the conveyor 162.

The conveyor 162 may transport the consignment P (see Fig. 13) accommodated in the space S in the front and rear direction X.

As illustrated in Fig. 13, the robot 10a may be docked (connected) to a storage box outside the robot 10a.

The robot 10a may be docked with the storage box, and the conveyor 162 may transport the consignment P contained in the container 32 to the storage box.

The conveyor 162 may transport the consignment P to the storage box conveyor C disposed inside the storage box.

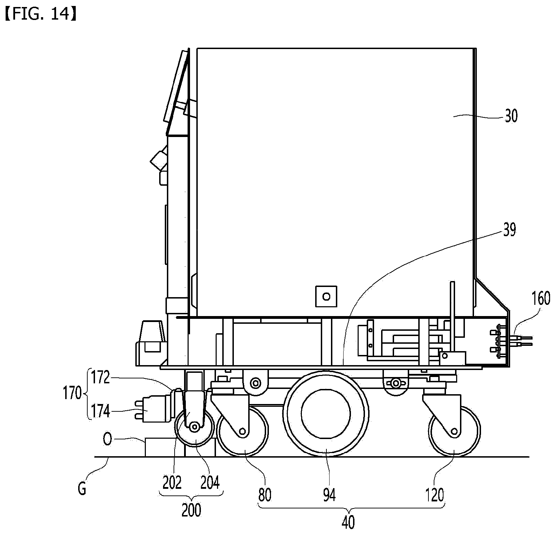

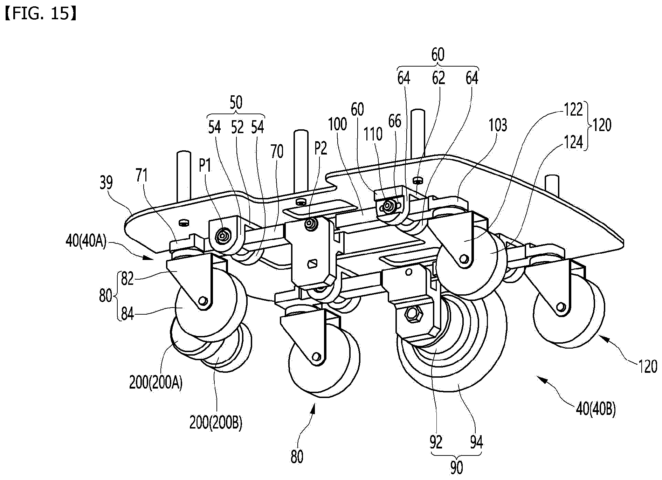

Fig. 14 illustrates a side view of an example of the wheel module according to an embodiment of the present disclosure, and Fig. 15 illustrates a perspective view of an example of the wheel module according to an embodiment of the present disclosure.

Hereinafter, the wheel module 40 will first be described. For convenience of explanation, Fig. 15 illustrates a perspective view when an in-wheel motor 90 of a left wheel module 40a is separated from a link motor arm 70 and a link back arm 100.

The wheel module 40 may comprise a front hinge 50, a rear hinge 60, a link motor arm 70, a front caster 80, an in-wheel motor 90, a link back arm 100, and a guide pin 110, and a rear caster 120.

The wheel module 40 may be an interlocking link module in which the link motor arm 70 and the link back arm 100 are interlocked.

The front hinge 50 and the rear hinge 60 may be fixed to the main body 30, especially the bottom plate 39, and each of the front hinge 50 and the rear hinge 60 may be a fixed point based on a robot set.

The link motor arm 70 and the link back arm 100 may be disposed on the front hinge 50 and the rear hinge 60, respectively, and the front caster 80, the in-wheel motor 90, and the rear caster 120 may be disposed to be distributed on the link motor arm 70 and the link back arm 100.

Hereinafter, each configuration of the wheel module 50 will be described.

The front hinge 50 may be mounted on the main body 30. The front hinge 50 may be mounted on a front portion of the main body 30, and the front portion of the main body 30 may be defined as a front portion based on a center of the main body 30 in the front and rear direction X.

The front hinge 50 may be mounted on the bottom plate 39 and may be mounted on the bottom plate 39 using a coupling member such as a screw.

The front hinge 50 may comprise a front mounter 52 and a pair of side brackets 54. The front mounter 52 may be coupled to the bottom plate 39 using a coupling member. The pair of side brackets 54 may protrude from the front mounter 52 and may be spaced apart from each other in the left and right direction Y. The pair of side brackets 54 may protrude downward from a side surface of the front mounter 52.

A first hinge shaft P1 may pass through the pair of side brackets 54 of the front hinge 50 and a first hinge shaft through-part 72 provided in a center of the link motor arm 70.

The first hinge shaft P1 may be a rotational center of the link motor arm 70.

The rear hinge 60 may be mounted at a rear portion of the main body 30. The rear portion of the main body 30 may be defined as a rear portion based on the center of the main body 30 in the front and rear direction X.

The rear hinge 60 may be mounted on the bottom plate 39, may be mounted on the bottom plate 39 using a coupling member such as a screw, and may be mounted to be spaced forward and backward from the front hinge 50.

The rear hinge 60 may comprise a rear mounter 62 and a pair of side brackets 64. The rear mounter 62 may be coupled to the bottom plate 39 using a coupling member. The pair of side brackets 64 may protrude from the rear mounter 64 and may be spaced apart from each other in the left and right directions Y. The pair of side brackets 64 may protrude downward from a side surface of the rear mounter 62.

A pin guide 66 guided by a guide pin 110 may be disposed on the rear hinge 60. The pin guide 66 may be a guide hole defined to be elongated in the rear hinge 40 in the front and rear direction X, for example, may be a long hole.

The pin guide 66 may be opened to each of the pair of brackets 64 of the rear hinge 60 in the left and right direction Y and may be defined to be elongated in the front and rear direction X.

The pin guide 66, which is the guide hole, may comprise a front end and a rear end that is spaced apart from the front end in the front and rear direction X, and the guide pin 110 may move between the front end of the pin guide 66 and the rear end of the pin guide 66.

The rear hinge 60 may be a sliding connector to which the link back arm 100 is slidably connected by the guide pin 110.

The link motor arm 70 may be a link front arm disposed in front of the link back arm 100.

The link motor arm 70 may be rotatably connected to the front hinge 50 through the first hinge shaft P1. The link motor arm 70 may rotate vertically around the front hinge 50.

The link motor arm 70 may be disposed to be elongated in the front and rear direction X with respect to the front hinge 50 and may be disposed approximately horizontally below the bottom plate 39. The link motor arm 70 may be spaced apart from the bottom plate 39 in the vertical direction Z.

The front portion of the link motor arm 70 may be defined as a portion disposed in front of the first hinge bamboo P1 with respect to the first hinge shaft P1, and the rear portion of the link motor arm 70 may be defined as a portion disposed behind the first hinge shaft P1 with respect to the first hinge shaft P1.

A front caster mounting portion 71 on which the front caster 80 is mounted may be disposed on the front portion of the link motor arm 70. A through-hole through which the vertical shaft of the front caster 80 passes may be opened in the vertical direction Z in the front caster mounting portion 71.

The first hinge shaft through-part through which the first hinge shaft P1 passes may be provided at a central portion of the link motor arm 70. In the first hinge shaft through-part, the first hinge shaft through-hole through which the first hinge shaft P1 passes may be opened in the left and right direction Y.

A second hinge shaft through-part through which the second hinge shaft P2 passes may be provided behind the link motor arm 70. In the second hinge shaft through-part, a second hinge shaft through-hole through which the second hinge shaft P1 passes may be opened in the left and right directions Y.

The front caster 80 may be installed on the link motor arm 70. The front caster 80 may be installed at the front portion of the link motor arm 70.

The front caster 80 may comprise a caster body 82 and a front wheel 84.

The caster body 82 may be installed at the front portion of the link motor arm 70. The caster body 82 may comprise a vertical shaft installed on the link motor arm 70.

The front wheel 84 may be disposed to be rotatably on the caster body 82 about the horizontal shaft.

The in-wheel motor 90 may be connected to the rear portion of the link motor arm 70.

The in-wheel motor 90 may have a motor 92 and a driving wheel 94.

The motor 92 may be coupled to at least one of the link motor arm 70 or the link back arm 100.

The driving wheel 94 may rotate by the motor 92. The driving wheel 94 may be connected to the rotation shaft of the motor or connected to a reducer connected to the rotation shaft of the motor 92.

The driving wheel 84 may be disposed next to the rear portion of link motor arm 70.

The link back arm 100 may be rotatably connected to the link motor arm 70 through the second hinge shaft P2.

The second hinge shaft P2 may be a connection point at which the link back arm 100 and the link motor arm 70 are connected to each other, and the second hinge shaft P2 may be disposed on an area on which the link back arm 100 and the link motor arm 70 do not collide with each other in a rotation range of each of the link back arm 100 and the link motor arm 70.

The second hinge shaft P2 may be a rotational center of the link motor arm 79 and a rotational center of the link back arm 100.

The link motor arm 79 and the link back arm 100 may be connected by the second hinge shaft P2.

The link motor arm 70 and the link back arm 100 may rotate in opposite directions about the second hinge shaft P2. When the link motor arm 70 rotates in a clockwise direction about the second hinge shaft P2, the link back arm 100 may rotate in a counterclockwise direction about the second hinge shaft P2, and when the motor arm 70 rotates in the counterclockwise direction about the second hinge shaft P2, the link back arm 100 may rotate in the clockwise direction about the second hinge shaft P2.

When the link back arm 100 rotate in the clockwise direction. or the link back arm 100 rotates om the counterclockwise, direction the link back arm 100 may be slidably guided on the rear hinge 60.

The link back arm 100 may be slidably connected to the rear hinge 60 by the guide pin 110.

A second hinge shaft through-part through which the second hinge shaft P2 passes may be defined in the front portion of the link back arm 100. In the second hinge shaft through-part, the second hinge shaft through-hole through which the second hinge shaft P2 passes may be opened in the left and right direction Y.

A guide pin mounting portion on which the guide pin 110 is mounted may be disposed at a central portion of the link back arm 100. The guide pin mounting portion may be defined as a portion of the link back arm 100, which disposed between the pair of brackets 64 of the rear hinge 60. A guide pin through-hole through which the guide pin 110 passes may be opened in the left and right direction Y in the guide pin mounting portion.

A rear caster mounting portion 103 on which the rear caster 120 is mounted may be disposed at the rear portion of the link back arm 100. A through-hole through which the vertical shaft of the rear caster 120 passes may be opened in the vertical direction Z in the rear caster mounting portion 103.

When the link motor arm 70 rotates around the front hinge 50 according to the shape of the ground, the link back arm 100 connected to the link motor arm 70 through the second hinge shaft P2 may rotate reversely with respect to the link motor arm 70 due to force by which the link motor arm 70 rotates. Here, when the guide pin 110 connected to the link back arm 110 is guided along the pin guide 56, the link back arm 110 may move approximately in the forward and backward direction X.

When the front caster 80 ascends or descends according to the shape of the ground, the driving wheel 74 may descend or ascend to generate a suspension effect. This is done because the rear caster 120 is linked to generate the suspension effect.

That is, since movement of the two casters 80 and 120 occurs simultaneously, a change in height of the driving wheel 94 may occur.

The guide pin 110 may be installed on the link back arm 100. The guide pin 110 may pass through the pair of side brackets 64 of the rear hinge 60 and the guide pin mounting portion of the link back arm 100.

The guide pin 100 may be slidably guided along the pin guide 66 when the link back arm 100 rotates.

The rear caster 120 may be installed on the link back arm 100. The rear caster 120 may be installed at the rear portion of the link back arm 100.

The rear caster 120 may comprise a caster body 122 and a rear wheel 124.

The caster body 122 may be installed at the rear portion of the link back arm 100. The caster body 122 may comprise a vertical shaft installed on the link back arm 100.

The rear wheel 124 may be disposed on the caster body 122 to rotate about the horizontal shaft.

An operation of the wheel module 40 as described above will be described as follows.

Since the link motor arm 70 rotates about a fixed shaft by the front hinge 50, and the link back arm 100 moves in the horizontal direction (forward and backward direction) along the rear hinge 60 together with the guide 110 according to a rotation radius of the link motor arm 70, the link motor arm 70 may be dependent on the rotation radius of the link motor arm 70 and be maintained in rotation radius.

The rotation radius of the link motor arm 70 may be limited to move according to a horizontal movement distance of the guide 110, and a height of the front caster 80 and a height of the driving wheel 94 may be adjusted by the rotation radius. The front caster 80 and the driving wheel 94 may be changed in height depending on the ground to secure grip force with the ground G.

In the wheel module 40, when the robot 10a travels on an uneven ground, all of the front caster 90, the driving wheel 94, and the rear caster 120 may be in contact with the ground to improve stability in traveling.

When the robot 10a comprises a pair of wheel modules 40A and 40B, the front caster 90 of the left wheel module 40A, the driving wheel 94, the rear caster 120, and the front caster 90 of the right wheel module 40B, the driving wheel 94, and the rear caster 120 may be interlocked with each other, and thus, the robot 10a may move while being grounded with the ground G.

Hereinafter, the auxiliary wheel 200 will be described.

The auxiliary wheel 200 may be disposed on the bottom plate 39 so as to be spaced apart from the wheel module 40. The auxiliary wheel 200 may be mounted on the bottom plate 39 independently of the wheel module 400. As illustrated in Fig. 14, the auxiliary wheel 200 may be installed without overlapping the wheel module 40 in the left and right direction Y.

When the robot 10a moves forward, the auxiliary wheels 200 may be in contact with the obstacle O rather than the front caster 80, and after the auxiliary wheels 200 stand on the obstacle O, the front caster 80 may be in contact with the obstacle O.

The auxiliary wheel 200 may comprise an auxiliary body 202 and a wheel 204.

The auxiliary body 202 may be coupled to the bottom plate 39 using a coupling member such as a screw.

The wheel 204 may be disposed on the auxiliary body 202 to rotate about the horizontal shaft.

A size of the auxiliary wheel 200 may be less than that of the front caster 80. A size of the wheel 204 may be less than that of the front wheel 84. A radius of the wheel 204 may be less than that of the front wheel 84.

The auxiliary wheels 200 may be configured to allow the robot 10a to overcome the obstacle O in multiple stages.

In order for the robot 10a to overcome a tall obstacle O, the motor 92 may require large force. Thus, when a diameter of the front caster 80 increases, power of the motor 92 may be reduced. In order to overcome an obstacle O having a height of 4cm, the robot 10a has to use a 6-inch front caster 80. In this case, when considering a rotation radius of the front caster 80, a size of the wheel module 40 may excessively increase, and also, a support point according to the rotation of the front caster 80 may be severely inflected.

When the front caster 80 comprises a 4-inch front wheel 84, and the auxiliary wheel 200 is mounted on the bottom plate 39, the force to overcome the obstacle O may be reduced, and the robot 10a may overcome the obstacle O through the 4-inch front wheel 84.

That is, when the auxiliary wheel 200 is mounted together with the wheel module 40, and the auxiliary wheel 200 rises on the obstacle O first, force of the motor 92, which is required for raising the front caster 80 above the obstacle O may be less than when there is no auxiliary wheel 200.

When the robot 10a overcomes the obstacle O having a height of 4 cm, the auxiliary wheels 200 may be mounted on the bottom plate 39 so as to be spaced a distance of 19 mm to 21 mm from the ground G. In this case, force acting on the auxiliary wheel 200 and force acting on the front caster 80 may be equally distributed.

In addition, the auxiliary wheel 200 and the front caster 80 may be disposed to be spaced at a certain distance (horizontally) from each other so that the front caster 80 is hung on the bump of the obstacle O at the moment at which the auxiliary wheel 200 crosses the obstacle O.

The robot 10a may further comprise a front charging terminal assembly 170 (see Fig. 14).

The robot 10a may be charged when the front charging terminal assembly 170 moves to a power supply terminal (not shown) of a charging station or when a charging cable (not shown) is connected to the front charging terminal assembly 170.

The front charging terminal assembly 170 may be coupled to the auxiliary body 202 of the auxiliary wheel 200. The front charging terminal assembly 170 may comprise a terminal bracket 172 coupled to the auxiliary body 202 and a terminal 174 disposed to protrude forward from the terminal bracket 172.

The terminal bracket 172 may be spaced apart from the wheel 204.

The terminal bracket 172 may have a bent shape and may be disposed on the auxiliary body 202 so as to be disposed in front of the auxiliary body 202.

In an example, the terminal bracket 172 may be coupled to the auxiliary body 202 through the coupling member such as the screw, and in another example, the bracket 172 may be integrated with the auxiliary body 202.

A height of a lower end of the front charging terminal assembly 170 may be greater than that of a lower end of the auxiliary wheel 200, and when the auxiliary wheel 200 stands on the obstacle O, the front charging terminal assembly 170 may not be damaged by the obstacle O.

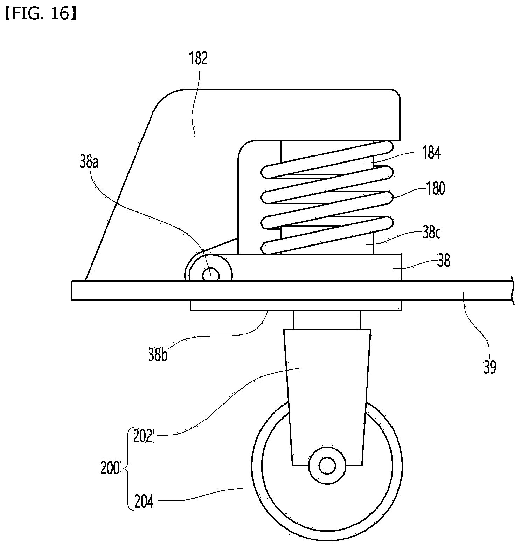

Fig. 16 illustrates a view of another example of the robot according to an embodiment of the present disclosure.

As illustrated in Fig. 16, the robot 10a may further comprise a hinge member 38 rotatably disposed on the bottom plate 39, and an auxiliary wheel 200' may be mounted on the hinge member 38.

The hinge member 38 may be connected to the bottom plate 39 through a hinge shaft 38a.

The hinge member 38 may rotate in the clockwise or counterclockwise direction about the hinge shaft 38a.

The auxiliary wheel 200' may comprise an auxiliary body 202' and an wheel 204, as in an example of the robot, and the auxiliary body 202' may not be directly coupled to the bottom plate 39, but be coupled to a hinge member 38.

An upper end of the auxiliary body 202' may be in contact with a bottom surface 38b of the hinge member 38. The auxiliary body 202' may be coupled to the hinge member 38 using a coupling member such as a screw.

Another example of the robot 10a may further comprise a spring 180 that elastically supports the hinge member 38 at an upper side of the hinge member 38.

An example of spring 180 may be a coil spring.

Another example of the robot may comprise a supporter 182 that supports the spring 180.

The supporter 182 may be disposed on the top surface of the bottom plate 39. The supporter 182 may be coupled to the bottom plate 39 by a coupling member such as a screw.

A supporter protrusion 184 that supports an upper end of the spring 180 may be disposed on the supporter 182.

A lower protrusion 38c that supports a lower end of the spring 180 may be disposed upward on the hinge member 38.

When an impact is applied to the auxiliary wheel 200' of the robot 10a illustrated in Fig. 16, the hinge member 38 and the spring 180 may absorb the impact.

Another example of the robot 10a may have configurations that are the same as or similar to those of an example of the robot 10a except for the hinge member 38 and the auxiliary body 202' of the auxiliary wheels 200', and thus, to avoid duplicated explanation, detailed description thereof will be omitted.

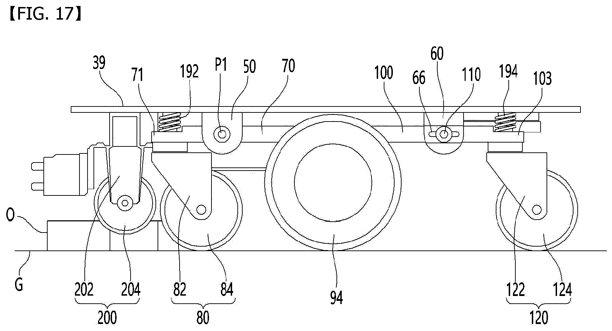

Fig. 17 illustrates a view of further another example of the robot according to an embodiment of the present disclosure.

As illustrated in Fig. 17, the robot 10a may further comprise a front spring 192 and a rear spring 194.

The front spring 192 may be disposed on the bottom plate 39 to buffer the link motor arm 70.

The rear spring 194 may be disposed on the bottom plate 39 to buffer the link back arm 100.

The link motor arm 70 may comprise a front caster mounting portion 71 to which the front caster is coupled, and the front spring 192 may be in contact with or coupled to the front caster mounting portion 71.

The link back arm 100 may comprise a rear caster mounting portion 103 to which the rear caster 120 is coupled, and the rear spring 194 may be in contact with or coupled to the rear caster mounting portion 103.

An example of the front spring 192 may be a coil spring disposed between the bottom plate 39 and the link motor arm 70 and may absorb an impact applied to the link motor arm 70.

An example of the rear spring 194 may be a coil spring disposed between the bottom plate 39 and the link back arm 100 and may absorb an impact applied to the link back arm 100.

A spring constant K of the front spring 192 may be less than a spring constant K of the rear spring 194. In this case, the buffering effect may start from the front portion of the robot 10a and be absorbed toward the rear portion of the robot 10a, and shaking of the robot 10a may be minimized during the buffering.

Further another example of the robot 10a may have configurations that are the same as or similar to those of an example of the robot 10a except for the front spring 192 and the rear spring 194, and thus, to avoid duplicated explanation, detailed description thereof will be omitted.

The above description is merely illustrative of the technical spirit of the present disclosure, and various modifications and changes can be made by those of ordinary skill in the art, without departing from the scope of the present disclosure.

Therefore, the embodiments disclosed in the present disclosure are not intended to limit the technical spirit of the present disclosure, but are intended to explain the technical spirit of the present disclosure. The scope of the technical spirit of the present disclosure is not limited by these embodiments.

The scope of the present disclosure should be interpreted by the appended claims, and all technical ideas within the scope equivalent thereto should be construed as falling within the scope of the present disclosure.

## Claims

1. A robot comprising:
a main body provided with a bottom plate;
at least one wheel module mounted on the bottom plate; and
an auxiliary wheel disposed on the bottom plate,
wherein the wheel module comprises:
a link motor arm;
a front caster installed on the link motor arm;
a link back arm rotatably connected to the link motor arm;
a rear caster installed on the link back arm;
a motor coupled to at least one of the link motor arm or the link back arm; and
a driving wheel rotating by the motor,
wherein the auxiliary wheel has a size less than a size of the front caster.

2. The robot according to claim 1, wherein a distance from a front end of the bottom plate to a front end of the auxiliary wheel is less a distance that from the front end of the bottom plate to a front end of the front caster.

3. The robot according to claim 1, wherein the wheel module is provided in a pair on the bottom plate,
the auxiliary wheel is provided in a pair on the bottom plate, and
a distance between the pair of auxiliary wheels is less than a distance between the pair of wheel modules.

4. The robot according to claim 1, wherein a height of a lower end of the auxiliary wheel is higher than a height of a lower end of the front caster.

5. The robot according to claim 1, wherein the auxiliary wheel comprises:
an auxiliary body coupled to the bottom plate; and
a wheel disposed to be rotatable with respect to the auxiliary body,
wherein a front charging terminal assembly is coupled to the auxiliary body.

6. The robot according to claim 5, wherein a height of a lower end of the front charging terminal assembly is higher than a height of a lower end of the wheel.

7. The robot according to claim 1, wherein the wheel module further comprises:
a front hinge which is mounted on the bottom plate and to which the link motor arm is rotatably connected through a first hinge shaft;
a rear hinge which is mounted on the bottom plate and on which a pin guide is disposed; and
a guide pin installed on the link back arm and slidably guided along the pin guide,
wherein the link back arm is connected to the link motor arm through a second hinge shaft.

8. The robot according to claim 7, wherein the pin guide is provided to be elongated in a forward and backward direction of the rear hinge.

9. The robot according to claim 1, further comprising a hinge member rotatably disposed on the bottom plate,
wherein the auxiliary wheel is mounted on the hinge member.

10. The robot according to claim 9, further comprising a spring configured to elastically support the hinge member at an upper side of the hinge member.

11. The robot according to claim 1, further comprising:
a front spring disposed on the bottom plate to buffer the link motor arm; and
a rear spring disposed on the bottom plate to buffer the link back arm.

12. The robot according to claim 11, wherein a spring constant of the front spring is less than a spring constant of the rear spring.

13. The robot according to claim 11, wherein the link motor arm comprises a front caster mounting portion to which the front caster is coupled, and
the front spring is in contact with the front caster mounting portion.

14. The robot according to claim 11, wherein the link back arm comprises a rear caster mounting portion to which the rear caster is coupled, and
the rear spring is in contact with the rear caster mounting portion.

15. The robot according to claim 1, wherein the main body further comprises:
a container having a space in which a consignment is accommodated; and
a conveyor disposed at an inner lower portion of the container to transport the consignment.
